# EUROPEAN PATENT APPLICATION

(11) **EP 4 137 295 A1**
(43) Date of publication of application: **22.02.2023**
(21) Application number: 22189629.3
(22) Date of filing: 10.08.2022
(51) Int. Cl.: B29C 65/10, B29C 65/50, B29C 65/78

(54) **HEAT DISTRIBUTION DEVICE FOR A PACKAGING MACHINE, STRIP APPLICATION APPARATUS HAVING A HEAT DISTRIBUTION DEVICE, PACKAGING MACHINE HAVING A HEAT DISTRIBUTION DEVICE AND PACKAGING MACHINE HAVING A STRIP APPLICATION APPARATUS**

(30) Priority: 18.08.2021 EP 21191844
(71) Applicant: Tetra Laval Holdings & Finance S.A., 1009 Pully (CH)
(72) Inventor: POLETTI, Gabriele, 41012 Carpi (IT)
(74) Representative: Tetra Pak - Patent Attorneys SE

(57) **Abstract**

There is described a heat distribution device (30) comprising a gas amplification device (31) having a flow channel (32), a first inlet (33), a second inlet (34) and an outlet (35), a heating device (36) fluidically connected to the outlet (35) and configured to receive a flow of gas (F) from the gas amplification device (31) and to heat the flow of gas (F) for creating a flow of heated gas (G) and a distribution nozzle (37) having one or more outlet openings and being fluidically connected to the heating device (36) so as to receive the flow of heated gas (G) and to expel at least one stream of heated gas through the one or more outlet openings. The gas amplification device (31) is configured such to receive a first flow of compressed gas (F1) through the first inlet (33) into the flow channel (32) and out of the outlet (35). The gas amplification device (31) is configured such that the first flow of compressed gas (F1) generates a second flow of gas (F2) entering the flow channel (32) through the second inlet (34) and out of the outlet (35) and mixing with the first flow of compressed gas (F1) so as to generate the flow of gas (F).

## Description

### TECHNICAL FIELD

The present invention relates to a heat distribution device for a packaging machine for packaging pourable products into packages, in particular composite packages.

Additionally, the present invention relates to a strip application apparatus for applying a sealing strip onto a multilayer packaging material and having a heat distribution device.

Furthermore, the present invention relates to a packaging machine for packaging pourable products into packages, in particular composite packages, having a heat distribution device and/or a strip application apparatus.

### BACKGROUND ART

As is known, many liquid or pourable food products, such as fruit juice, UHT (ultra-high-temperature treated) milk, wine, tomato sauce, etc., are sold in composite packages at least partially made from a multilayer packaging material.

A typical example is a parallelepiped-shaped composite package for liquid or pourable food products formed from a multilayer packaging material. One example composite package is known as Tetra Brik Aseptic (registered trademark). Such composite packages are made by sealing and folding the laminated multilayer packaging material. The packaging material has a multilayer structure comprising a base layer, e.g. of paper or cardboard, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Composite packages of this sort are normally produced on fully automatic packaging machines, some of which advance and sterilize a web of the multilayer packaging material, which is then formed into a tube and filled with the pourable product before its formation into individual sealed composite packages.

The forming of the tube within such packaging machines requires to overlap the longitudinal edges of the web of the multilayer packaging material with one another and to longitudinally seal the tube.

Furthermore, prior to the folding and the longitudinal sealing, a sealing strip of heat-seal plastic material is applied and sealed onto one of the longitudinal edges of the web of packaging material. The web of packaging material is folded such that the sealing strip is in contact with the inner side of the tube. Thus, the sealing strip gets into contact with the pourable product.

More specifically, the packaging machine comprises a strip application apparatus so as to apply the sealing strip onto the web of the packaging material. The strip application apparatus is configured to heat seal the sealing strip to an inner layer of the web of packaging material, the inner layer being defined by one of the layers of the heat-seal plastic material.

The strip application apparatus comprises a heat distribution device configured to direct heated air onto the web of packaging material along one of the longitudinal edges and the sealing strip and an application device for applying the sealing strip onto the web of packaging material.

Even though the known heat distribution devices work satisfyingly well, a desire is felt in the sector to further improve such heat distribution devices and/or the known strip application apparatuses and/or the known packaging machines.

### DISCLOSURE OF INVENTION

It is an object of the present invention to provide in a straightforward and low-cost manner an improved heat distribution device for a packaging machine for packaging pourable products into packages, in particular composite packages.

It is a further object of the present invention to provide in a straightforward and low-cost manner an improved strip application apparatus for a packaging machine for packaging pourable products.

It is an even other object of the present invention to provide in a straightforward and low-cost manner an improved packaging machine for packaging pourable products into packages, in particular composite packages.

According to the present invention, there is provided a heat distribution device as claimed in claim 1.

Further advantageous embodiments according to the invention are specified in the dependent claims.

Additionally, according to the present invention, there is provided a strip application apparatus as claimed in claim 12 or 13.

Furthermore, according to the present invention there is provided a packaging machine as claimed in claim 14 or 15.

### BRIEF DESCRIPTION OF THE DRAWINGS

A non-limiting embodiment of the present invention will be described by way of example with reference to the accompanying drawings, in which:
Figure 1 a schematic view of a packaging machine having a heat distribution device according to the present invention, with parts removed for clarity;
Figure 2 is a schematic and perspective view of a package obtained during operation of the packaging machine of Figure 1, with parts removed for clarity;
Figure 3 is a lateral sectioned view of a strip application apparatus of the packaging machine of Figure 1 having a heat distribution device according to the present invention, with parts removed for clarity;
Figure 4 is a perspective view of the heating distribution device of Figure 3, with parts removed for clarity;
Figure 5 is a schematic view of the heating distribution device of Figure 3.

### BEST MODES FOR CARRYING OUT THE INVENTION

Number 1 indicates as a whole a packaging machine for packaging pourable products, in particular pourable food products, such as milk, cream, yoghurt drinks, yoghurt, fruit juice, wine, tomato sauce, sugar, salt, emulsions, solutions containing solid particles (e.g. legumes), etc., into packages 2, in particular composite packages 2.

Preferentially, packages 2 may be formed from a multilayer packaging material.

The multilayer packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face 3 of packages 2 eventually contacting the pourable product packaged within packages 2.

According to some possible non-limiting embodiments, the multilayer packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the multilayer packaging material may also comprise a further layer of heat-seal plastic material being interposed between the layer of gas- and light-barrier material and the layer of fibrous material.

Preferentially, the multilayer packaging material may be provided as a(n endless) web 4 of packaging material, in particular containing a plurality of successively aligned repeat units. Each repeat unit defining a precursor of one respective package 2.

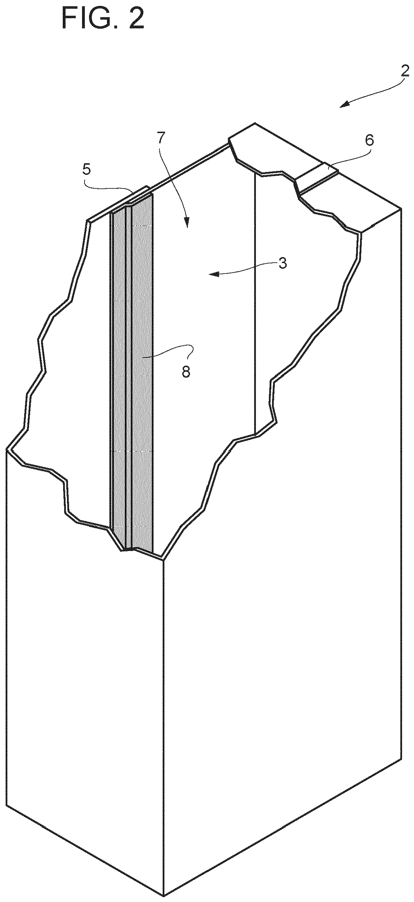

With particular reference to Figure 2, each package 2 may comprise a longitudinal seam portion 5 and a pair of transversal seal portions 6, in particular a top transversal seal portion 6 and a bottom transversal seal portions 6 (i.e. one seal portion 6 at an upper portion of package 2 and another seal portion 6 at a lower portion of package 2).

Each package 2 may comprise inner face 3 and an inner space 7 containing the pourable product. In particular, inner face 3 faces inner space 7 and/or is in contact with the pourable product.

Furthermore, each package 2 may comprise a sealing strip section 8 sealed and/or heat fused onto inner face 3 and extending (substantially) parallel to the respective longitudinal seam portion 5.

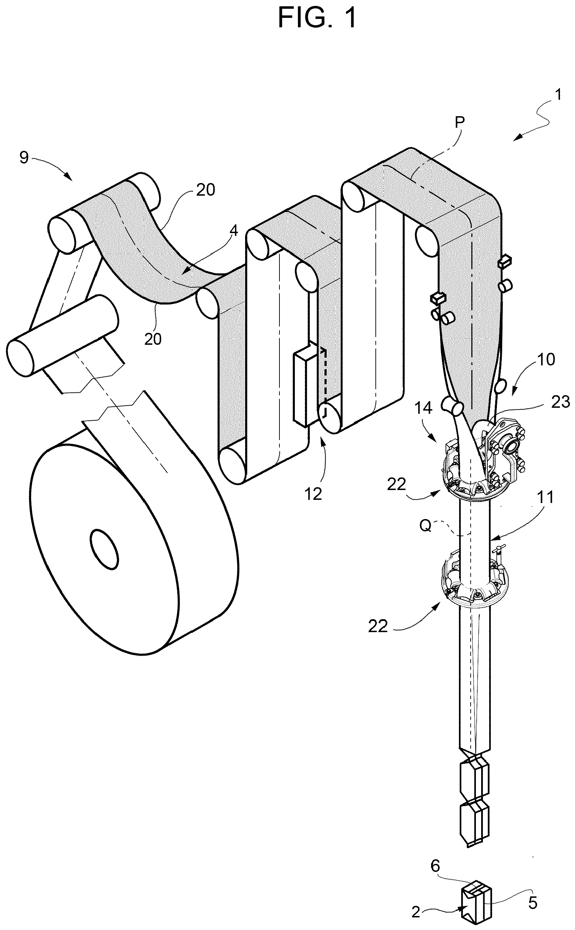

With particular reference to Figure 1, packaging machine 1 may comprise:
- a conveying apparatus 9 for advancing web 4 along a web advancement path P to a tube forming station 10, at which, in use, web 4 is formed into a tube 11;
- a strip application apparatus 12 for applying a sealing strip 13 of a heat-sealable material, in particular a heat-sealable plastic material;
- a tube forming and sealing apparatus 14 configured to form tube 11 from the, in use, advancing web 4 and longitudinally sealing tube 11;
- a filling device for filling tube 11 with the pourable product; and
- a package forming unit (not shown and known as such) configured to form, transversally seal and cut the, in use, advancing tube 11 for forming packages 2, from the, in use, advancing tube 11.

Preferentially, packaging machine 1 may also comprise an isolation chamber (not shown) separating an inner environment from an outer environment.

In particular, tube forming and sealing apparatus 14 is configured to form and longitudinally seal tube 11 within the isolation chamber (i.e. in the inner environment).

In particular, tube forming and sealing apparatus 14 may be arranged at tube forming station 10.

Strip application apparatus 12 may be arranged upstream of tube forming and sealing apparatus 14 along advancement path P.

Preferentially, packaging machine 1 may also comprise a sterilizing unit (not shown and known as such) adapted to sterilize the, in use, advancing web 4.

Preferentially, conveying apparatus 9 may also be configured to advance tube 11 and any intermediate of tube 11 in a manner known as such along a tube advancement path Q, in particular from tube forming station 10 to, and at least partially through, the package forming unit.

In particular, with the wording intermediates of tube 11 any configuration of web 4 is meant prior to obtaining the tube structure and after the beginning of the folding operation of web 4 by tube forming and sealing apparatus 14. In other words, the intermediates of tube 11 are a result of a gradual folding of web 4 so as to obtain tube 11.

Preferentially, web 4 may comprise a first longitudinal edge 20 and a second longitudinal edge 21 spaced apart from first longitudinal edge 20. In particular, first longitudinal edge 20 and second longitudinal edge 21 may be spaced apart along a transversal axis A of web 4.

Furthermore, tube forming and sealing apparatus 14 may be configured to overlap first longitudinal edge 20 and second longitudinal edge 21 with one another. As will be described in more detail further below, overlapping of first longitudinal edge 20 and second longitudinal edge 21 occurs with sealing strip 13 having been sealed and/or heat fused to first longitudinal edge 20.

Preferentially, tube forming and sealing device 14 may comprise at least two forming ring assemblies 22 configured to fold in cooperation with one another web 4 gradually into tube 11.

Furthermore, tube forming and sealing apparatus 14 may also comprise a longitudinal sealing device being adapted to longitudinally seal tube 3 along seam portion 5, in particular by heating tube 11, even more particular the overlapping first longitudinal edge 20 and second longitudinal edge 21. In particular, the longitudinal sealing device may be of the kind operating by means of induction heating or by a stream of a hot fluid or by means of ultrasound.

In more detail, a sealing head of the longitudinal sealing device may be interposed (substantially) between forming ring assemblies 22.

Preferably, the longitudinal sealing device may also comprise a pressuring assembly configured to exert a mechanical force on tube 11, in particular on the overlapping first longitudinal edge 20 and second longitudinal edge 21.

With particular reference to Figure 1, the filling device may comprise a filling pipe 23 being in fluid connection with a pourable product storage tank (not shown) for storing/providing for the pourable product to be packaged. Filling pipe 23 may, in use, be at least partially arranged within tube 11 and may be configured to direct, in use, the pourable product into tube 11.

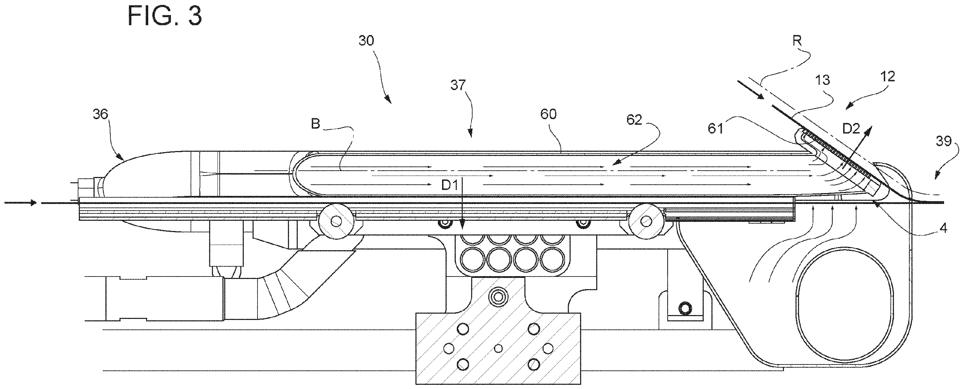

With particular reference to Figure 3, strip application apparatus 12 may comprise:
- an advancement device configured to advance sealing strip 13 along a strip advancement path R and towards and onto web 4, in particular first longitudinal edge 20;
- a heat distribution device 30 configured to direct a stream of a heated gas, in particular a stream of heated air, onto web 4, in particular first longitudinal edge 20, and/or onto sealing strip 13; and
- an application device configured to apply (heated) sealing strip 13 onto (heated) web 4, in particular first longitudinal edge 20.

Preferably, strip application apparatus 12 may also comprise an alignment device configured to vary the position and/or alignment of sealing strip 13 with respect to web 4, in particular first longitudinal edge 20. In other words, the alignment device is configured to position and/or align sealing strip 13 with respect to web 4, in particular first longitudinal edge 20.

Preferentially, each sealing strip section 8 may correspond to a portion of sealing strip 13.

In more detail, heat distribution device 30 may be configured to direct a first stream of heated gas, in particular along a first direction D1, onto web 4, in particular first longitudinal edge 20, and/or a second stream of heated gas, in particular along a second direction D2, onto sealing strip 13.

Preferentially, heat distribution device 30 may be configured to direct the first stream of heated gas onto web 4, while web 4 advances along a first heating portion of web advancement path P and/or to direct the second stream of heated gas onto sealing strip 13 during advancement of sealing strip 13 along a second heating portion of strip advancement path R.

According to some preferred non-limiting embodiments, first direction D1 and second direction D2 may be distinct. In particular, first direction D1 may be transversal to second direction D2.

Preferentially, the first stream of heated gas is directed on an application face of web 4, which defines inner face 3 and the second stream of heated gas is directed onto a face of sealing strip 13, which is put into contact with the application face of web 4.

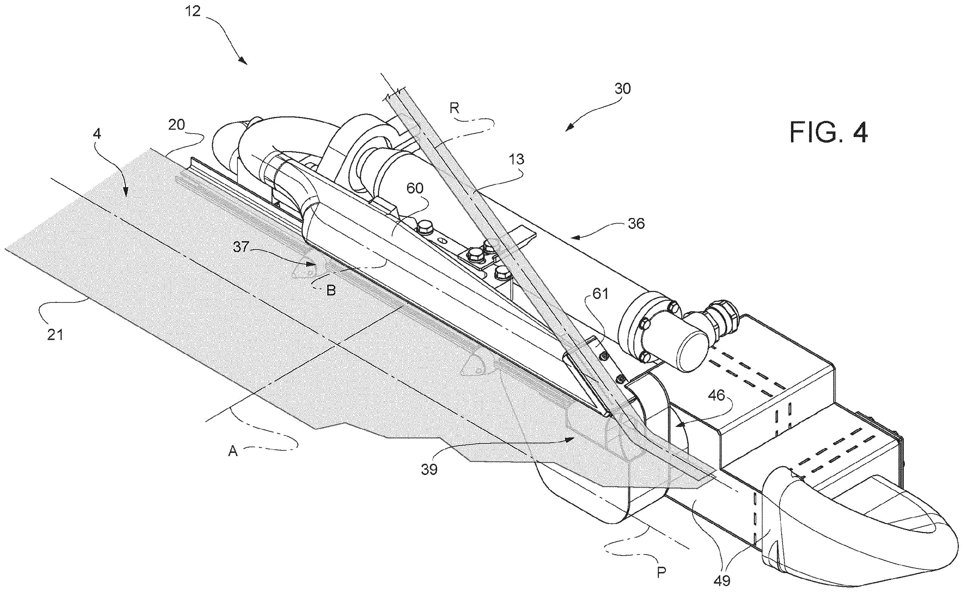

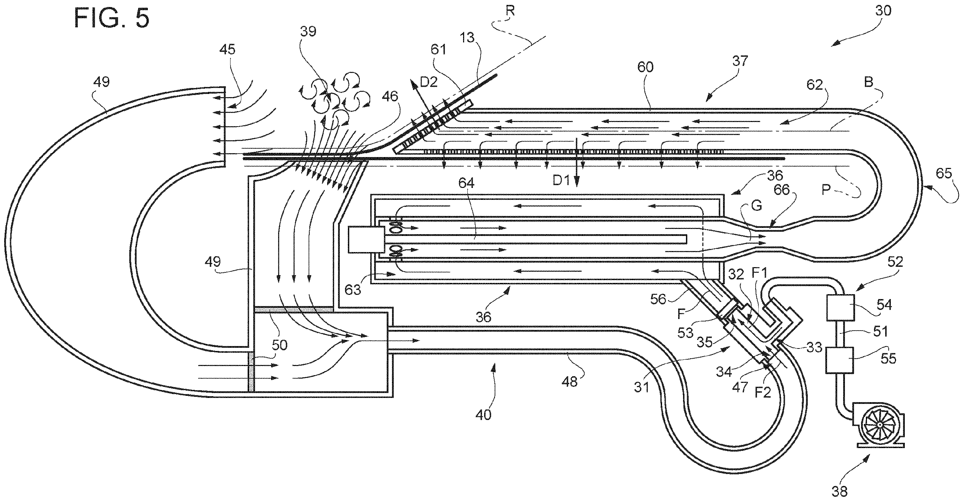

With particular reference to Figures 3 to 5, heat distribution device 30 comprises:
- a gas amplification device 31 (see Figure 5) having a flow channel 32, a first inlet 33, a second inlet 34 and an outlet 35;
- a heating device 36 fluidically connected to outlet 35 and configured to receive a flow of gas F from gas amplification device 31 and to heat flow of gas F for creating a flow of heated gas G; and
- a distribution nozzle 37 having one or more outlet openings and being fluidically connected to heating device 36 so as to receive flow of heated gas G and to expel at least one stream of heated gas through the one or more outlet openings.

In more detail, first inlet 33 is configured such to be coupled and/or is coupled to a compressed gas source 38, preferentially so as to receive a compressed gas, in particular compressed air, from compressed gas source 38.

According to the embodiment shown in Figures 3 to 5, heat distribution device 30 may comprise compressed gas source 38. According to such an embodiment, compressed gas source 38 may comprise a compressor, in particular being configured to compress ambient air.

Alternatively, compressed gas source 38 could be external to heat distribution device 30. For example, compressed gas source 38 may be or may be part of a centralized compressed gas distribution system present within a production site.

Preferentially, the compressed gas, in particular the compressed air, has a pressure ranging between 1,5 bar to 7,0 bar, preferentially 2,0 bar to 4,0 bar.

Gas amplification device 31 is configured such to receive a first flow F1 of a compressed gas through first inlet 33 into flow channel 32 and out of outlet 35. Additionally, gas amplification device 31 is configured such that first flow F1 of compressed gas generates a second flow F2 of gas entering flow channel 32 through second inlet 34 and out of outlet 35 thereby generating flow of gas F streaming out of outlet 35, and in particular to heating device 36. In particular, flow of gas F results from the mixing of first flow F1 of compressed gas and second flow F2 of gas.

In other words, gas amplification device 31 is configured such that first flow F1 of compressed gas entering flow channel 32 through first inlet 33 entrains second flow F2 of gas through second inlet 34.

According to some preferred embodiments, gas amplification device 31 may be configured to operate by means of the Coanda effect.

In more detail, gas amplification device 30 may comprise at least one (curved) Coanda profile (i.e. a (curved) surface profile formed to induce the Coanda effect) arranged within flow channel 32 and/or first inlet 33 and shaped such that first flow F1 of compressed gas generates second flow F2 of gas through second inlet 34, into flow channel 32 and out of outlet 35 by means of the Coanda effect.

In use, first flow F1 of compressed gas flows along and/or adheres to the at least one Coanda profile, which directs it toward and to outlet 35. This results in the formation of a low pressure area within flow channel 32, which again generates second flow F2 of gas.

According to some possible non-limiting embodiments, an amplification ratio (i.e. the (volume) ratio of gas exiting from output 35 to the compressed gas entering through first input 33) equals at least 2:1, in particular at least 3:1, even more particular at least 4:1.

In more detail, second inlet 34 may be fluidically connected to ambient air. In particular, and as will be disclosed in further detail further below, second inlet 34 may be fluidically connected to a space 39, which contains ambient area at an increased temperature (i.e. above ambient temperature).

Preferentially, distribution nozzle 37 is arranged in and/or adjacent to space 39. In this way, space 39 is, in use, heated by the at least one stream of heated gas. In other words, space 39 may be defined by the position of distribution nozzle 37.

In particular, the temperature of space 39 may be higher than 60°C, in particular higher than 70°C.

According to such a non-limiting embodiment, one ensures that a temperature of flow of gas F is higher than ambient temperature. This also means that by entraining air from space 39 it is possible to improve the energy efficiency of heat distribution device 30.

In particular, heating device 36 (as will be described in further detail below) may be configured to heat flow of gas F so as to obtain flow of heated gas G having a temperature of more than 120 °C, in particular more than 140°C, even more particular of more than 170°C.

More specifically, heat distribution device 30 may comprise a supply conduct 40 fluidically connected to second inlet 34.

Supply conduct 40 may have at least one inlet opening, preferentially at least a first inlet opening 45 and a second inlet opening 46.

Preferentially, the at least one inlet opening is, in particular first inlet opening 45 and second inlet opening 46 are, arranged adjacent to distribution nozzle 37 and/or at space 39.

Preferentially, first inlet opening 45 and second inlet opening 46 are arranged transversal to one another. In particular, first inlet opening 45 and second inlet opening 46 are arranged substantially perpendicular to one another.

In further detail, supply conduct 40 may also comprise an outlet passage 47 arranged adjacent to second inlet 34. Thus, in use, first flow F1 of compressed gas entrains air through the at least one inlet opening, in particular first inlet opening 45 and second inlet opening 46, into supply conduct 40 and through outlet passage 47 and second inlet 34 into flow channel 32.

Preferentially, supply conduct 40 may comprise a main conduct portion 48 having outlet passage 47 and at least one auxiliary portion 49 having the at least one inlet opening. Preferentially, supply conduct 40 may comprise two auxiliary portions 49 one having first inlet opening 45 and the other one having second inlet opening 46.

Preferentially, supply conduct 40 may also comprise one or more filter elements 50 interposed between the at least one inlet opening, in particular first inlet opening 45 and second inlet opening 46, and outlet passage 47.

With particular reference to Figure 5, heat distribution device 30 may also comprise a supply channel 51 fluidically connecting first inlet 33 and compressed air source 38 with one another.

Furthermore, heat distribution device 30 may comprise:
- a first sensor device 52 configured to determine a flow rate and/or a pressure of the compressed gas, in particular within supply channel 51, introduced into flow channel 32 and through first inlet 33; and/or
- a second sensor device 53 configured to determine a flow rate and/or a pressure of the flow of gas F.

More specifically, first sensor device 52 may comprise a flow meter 54 for measuring the flow rate of the compressed gas and/or a pressure sensor, for measuring the pressure of the compressed gas.

According to some possible non-limiting embodiments, heat distribution device 30 may comprise a control unit configured to control the pressure and/or flow rate of the compressed gas in dependence of the pressure and/or flow rate of the compressed gas as determined, in use, by first sensor device 52 and/or in dependence of the pressure and/or flow rate of flow of gas F flowing from outlet 35 to heating device 36 as determined, in use, by second sensor device 53.

In more detail, the control unit may be configured to control compressed air source 38, in particular the compressor, and/or a pressure regulator 55 in dependence of the pressure and/or flow rate of the compressed gas as determined, in use, by first sensor device 52.

According to some possible embodiments, the control unit may be a single component associated to heat distribution device 30. Alternatively, the control unit may be incorporated into a control device of packaging machine 1 and/or strip application apparatus 12.

Preferentially, heat distribution device 30 may comprise a further conduct 56 fluidcally connecting gas amplification device 31, in particular outlet 35, with heating device 36.

With particular reference to Figures 3 to 5, distribution nozzle 37 may comprise a main elongated portion 60 having a first plurality of outlet openings and an auxiliary portion 61 mounted to the main elongated portion 60 and having a second plurality of outlet openings.

In particular, main elongated portion 60 extends along a longitudinal axis B.

Preferentially, main elongated portion 60 and/or longitudinal axis B may be arranged parallel to web 4 (while web 4 advances, in use, along the first heating portion).

Preferentially, auxiliary portion 61 may be arranged parallel to sealing strip 13 (while sealing strip 13 advances, in use, along the second heating portion).

According to some preferred non-limiting embodiments, the first plurality of outlet openings may be configured to direct the first stream of heated gas along first direction D1 and the second plurality of outlet openings may be configured to direct the second stream of heated gas along second direction D2.

In particular, the first plurality of outlet openings and the second plurality of outlet openings may be arranged such that second direction D2 is transversal to first direction D1. In further detail, distribution nozzle 37, in particular main elongated portion 60, may comprise an inner space 62 being in fluidic connection with heating device 36 and configured to receive flow of heated gas G. In particular, inner space 62 may be in fluidic connection with the first plurality of outlet openings and with the second plurality of outlet openings.

According to some preferred non-limiting embodiments, heating device 36 may be configured to heat flow of gas F such that flow of heated gas G and/or the first stream of heated gas and/or the second stream of heated gas has a temperature of more than 120°C, in particular of at least 140°C, even more particular of at least 170 °C.

With particular reference to Figure 5, heating device 36 may comprise:
- an inner space 63 being in fluidic connection with outlet 35, in particular through further conduct 56, and distribution nozzle 37, in particular inner space 62, and configured to allow collection of flow of gas F and to allow distribution of flow of heated gas G; and
- heating elements 64, in particular resistance heating elements 64, arranged within inner space 63 and configured to heat flow of gas F introduced into inner space 63 so as to generate flow of heated gas G.

Moreover, heat distribution device 30 may comprise a connection duct 65 fluidically connecting heating device 36, in particular inner space 63, with distribution nozzle 37, in particular inner space 62.

Preferentially, connection duct 65 may comprise a constricted section 66 generating a Venturi effect on flow of heated gas G.

According to some possible non-limiting embodiments, heating device 36 may also comprise one or more temperature sensors configured to measure the temperature of flow of heated gas G, in particular within inner space 63 and/or connection duct 65.

The control unit may be configured to control operation of heating device 36, in particular heating elements 64, in dependence of the temperature(s) measured by the one or more temperature sensors, in particular so as to guarantee a predetermined temperature of flow of heated gas G and/or the first stream of heated gas and/or the second stream of heated gas.

In use, packaging machine 1 packages the pourable product into packages 2.

In more detail, operation of packaging machine 1 may comprise the steps of:
- conveying, in particular by conveying apparatus 9, during which web 4 advances along path P;
- applying, during which sealing strip 13 is applied onto web 4, in particular onto first longitudinal edge 20;
- forming and sealing, during which web 4 is formed into tube 3 and tube 3 is longitudinally sealed;
- advancing, during which tube 3 advances along path Q;
- filling, during which the pourable product is filled into tube 3; and
- forming, during which packages 2 are formed from tube 3, in particular by shaping tube 3 and transversally sealing and cutting tube 3.

In more detail, the step of applying may comprise the sub-steps of:
- advancing web 4 along the first heating portion;
- advancing strip 13 along the second heating portion;
- heating web 4, in particular first longitudinal edge 20, and/or sealing strip 13; and
- attaching sealing strip 13 onto web 4, in particular first longitudinal edge 20.

More specifically, during the sub-step of heating, heating device 36 heats web 4, in particular first longitudinal edge 20, by means of the first stream of heated gas and/or sealing strip 13 by means of the second stream of heated gas.

During the sub-step of heating, first flow F1 of compressed gas flowing into flow channel 32 generates second flow F2 of gas resulting in flow of gas F flowing out of gas amplifying device 30 and into heating device 36. Heating device 36 heats flow of gas F and flow of heated gas G flows to distribution nozzle 37.

Furthermore, the first stream of heated gas exits from the first plurality of outlet openings and/or the second stream of heated gas exists from the second plurality of outlet openings.

Advantageously, during the sub-step of heating, the pressure and/or flow rate of the compressed gas and/or of flow of gas F is controlled such that the pressure and/or flow rate of the compressed gas and/or of flow of gas F corresponds to predetermined values.

For example, during the sub-step of heating, the control unit controls compressed air source 38, in particular the compressor, and/or pressure regulator 55 in dependence of the pressure and/or flow rate of the compressed gas as determined by first sensor device 52.

The advantages of heat distribution device 30 and/or strip application apparatus 12 and/or packaging machine 1 according to the present invention will be clear from the foregoing description.

In particular, heat distribution device 30 comes along with a reduced consumption of compressed gas.

Furthermore, as air already being heated up with respect to the ambient temperature is entrained within flow channel 32 one increases the efficiency as the difference between the temperature of flow of gas F and the required temperature of flow of heated gas G is smaller than it would be with air entering heating device 36 being at ambient temperature.

Another advantage resides in providing for first sensor device 52 and/or second sensor device 53 and the possibility to control the pressure of the compressed gas by means of pressure regulator 55, thereby improving the overall control of the stream of heated gas, in particular the first stream of heated gas and the second stream of heated gas.

An even other advantages resides in providing for the one or more temperature sensors so as to optimize operation of heating device 36.

Clearly, changes may be made to heat distribution device 30 and/or strip application apparatus 12 and/or packaging machine 1 as described herein without, however, departing from the scope of protection as defined in the accompanying claims.
According to a possible embodiment not shown, longitudinal sealing device 23 could comprise a heat distribution device 30.

## Claims

**1.** Heat distribution device (30) for a packaging machine (1) for packaging a pourable product into a package (2);
the heat distribution device (30) comprises:
- a gas amplification device (31) having a flow channel (32), a first inlet (33), a second inlet (34) and an outlet (35);
- a heating device (36) fluidically connected to the outlet (35) and configured to receive a flow of gas (F) from the gas amplification device (31) and to heat the flow of gas (F) for creating a flow of heated gas (G) ; and
- a distribution nozzle (37) having one or more outlet openings and being fluidically connected to the heating device (36) so as to receive the flow of heated gas (G) and to expel at least one stream of heated gas through the one or more outlet openings;
wherein the first inlet (33) is configured such to be coupled to a compressed gas source (38);
wherein the gas amplification device (31) is configured such to receive a first flow of compressed gas (F1) from the compressed gas source (38) through the first inlet (33) into the flow channel (32) and out of the outlet (35);
wherein the gas amplification device (31) is configured such that the first flow of compressed gas (F1) generates a second flow of gas (F2) entering the flow channel (32) through the second inlet (34) and out of the outlet (35) and mixing with the first flow of compressed gas (F1) so as to generate the flow of gas (F).

**2.** Heat distribution device according to claim 1, wherein the gas amplification device (31) comprises a Coanda profile arranged within the flow channel (32) and/or the first inlet (33) and shaped such that the first flow of compressed gas (F1) generates the second flow of gas (F2) through the second inlet (34), into the flow channel (32) and out of the outlet (35) by means of the Coanda effect.

**3.** Heat distribution device according to claim 1 or 2, wherein the second inlet (34) is fluidically connected to ambient air.

**4.** Heat distribution device according to any one of the preceding claims, and further comprising a supply conduct (40) fluidically connected to the second inlet (34) ;
wherein the supply conduct (40) comprises at least one inlet opening (45, 46).

**5.** Heat distribution device according to claim 4, wherein the at least one inlet opening (45, 46) is arranged adjacent to the distribution nozzle (37).

**6.** Heat distribution device according to claim 4 or 5, wherein the at least one inlet opening (45, 46) is arranged adjacent to a space (39), which has a temperature being above ambient temperature due to the at least one stream of heated gas exiting from the one or more outlet openings.

**7.** Heat distribution device according to any one of claims 4 to 6, comprising a first inlet opening (45) and a second inlet opening (46) being arranged transversal to one another.

**8.** Heat distribution device according to any one of the preceding claims, and further comprising:
- a first sensor device (52) configured to determine a flow rate and/or a pressure of the compressed gas introduced into the flow channel (32) and through the first inlet (33); and/or
- a second sensor device (53) configured to determine a flow rate and/or a pressure of the gas flowing from the outlet (35) to the heating device (36).

**10.** Heat distribution device according to any one of the preceding claims, and further comprising a control unit configured to control the pressure and/or flow rate of the compressed gas in dependence of the pressure and/or flow rate of the compressed gas as determined, in use, by the first sensor device (52) and/or in dependence of the pressure and/or flow rate of the flow of gas (F) flowing from the outlet (35) to the heating device (36) as determined, in use, by the second sensor device (53).

**11.** Heat distribution device according to any one of the preceding claims, wherein the distribution nozzle (37) comprises a main elongated portion (60) having a first plurality of outlet openings and an auxiliary portion (61) mounted to the main elongated portion (60) and having a second plurality of outlet openings;
wherein the first plurality of outlet openings is configured to direct a first stream of heated gas along a first direction (D1) and the second plurality of outlet openings is configured to direct a second stream of heated gas along a second direction (D2);
wherein the first plurality of outlet openings and the second plurality of outlet openings are arranged such the second direction (D2) is transversal to the first direction (D1).

**12.** Strip application apparatus (12) for applying a sealing strip (13) onto a web (4) of a multilayer packaging material comprising at least:
- an advancement device configured to advance the sealing strip (13) along a strip advancement path (R) and towards and onto the web (4) of multilayer packaging material;
- a heat distribution device (30) according to any one of the preceding claims configured to direct a stream of the heated gas onto the web (4) of multilayer packaging material and/or onto the sealing strip (13); and
- an application device configured to apply the sealing strip (13) onto the web (4) of multilayer packaging material.

**13.** Strip application apparatus (12) according to claim 12, wherein the distribution nozzle (37) comprises a main elongated portion (60) having a first plurality of outlet openings and an auxiliary portion (61) mounted to the main elongated portion (60) and having a second plurality of outlet openings;
wherein the first plurality of outlet openings is configured to direct a first stream of heated gas onto the web (4) of multilayer packaging material and the second plurality of outlet openings is configured to direct a second stream of heated gas onto the sealing strip (13).

**14.** Packaging machine (1) for packaging a pourable product into packages (2) comprising at least one heat distributing device (30) according to any one of claims 1 to 11.

**15.** Packaging machine (1) for packaging a pourable product into packages (2) formed from a web (4) of a multilayer packaging material comprising at least one strip application apparatus (12) according to claim 12 or 13.
